(19) **Europäisches Patentamt**

**European Patent Office**

**Office européen des brevets**

(11) Publication number: **0 468 511 B1**

## EUROPEAN PATENT SPECIFICATION

(45) Date of publication of patent specification: **27.09.95**

(51) Int. Cl.⁶: **F16H 13/06**, F16H 15/56

(21) Application number: **91112531.8**

(22) Date of filing: **25.07.91**

Divisional application 94110765.8 filed on 11.07.94.

(54) **Centrifugal planetary friction transmission.**

(30) Priority: **25.07.90 CN 90104953**

(43) Date of publication of application:
**29.01.92 Bulletin 92/05**

(45) Publication of the grant of the patent:
**27.09.95 Bulletin 95/39**

(84) Designated Contracting States:
**CH DE FR GB IT LI SE**

(56) References cited:
**DE-C- 1 033 475**      **FR-A- 1 049 544**
**FR-A- 2 599 802**      **GB-A- 923 508**
**US-A- 2 495 470**      **US-A- 3 889 554**

(73) Proprietor: **Zheng, Yue**
**Room 105, Building 15(old),**
**Beicun,**
**Nankai University**
**Tianjin (CN)**

Proprietor: **Li, Yunzao**
**Room 105 Building 15 (old),**
**Beicun,**
**Nankai University**
**Tianjin (CN)**

(72) Inventor: **Zheng, Yue**
**Room 105 Building 15 (old),**
**Beicun,**
**Nankai University,**
**Tianjin (CN)**

(74) Representative: **Liesegang, Roland, Dr.-Ing. et al**
**FORRESTER & BOEHMERT**
**Franz-Joseph-Strasse 38**
**D-80801 München (DE)**

## Description

### Background of the Invention

This invention relates to friction drive field and more particularly to centrifugal planetary friction transmission in which the centrifugal force is used as positive pressure.

Friction drive has a series of advantages such as simpler structure, easy machining, quiet and even operation, good shock-resistance and overload protection, and it may provide a infinitely speed-variable drive. On the other hand, conventional friction drive has some drawbackes, i.e. great wear and heat-generation, lower driving efficiency, inaccurate drive ratio and larger volume. Said drawbacks limit its use, in particular, it can not be used for continuous high power drive. The basic reason resulting in above problems is that conventional friction transmission relies on either point contact or line contact accompanied by geometry sliding, and the large compressive force required by large friction force also acts on the supports such as bearings and shafts.

Us Patent No. 3, 889, 554 has disclosed a centrifugal planetary friction transmission comprising at least three external-friction or planet pulleys which are linked coaxially to form a planet friction pulley set, in which two external-friction pulleys contact respectively with two rotatable internal-friction pulleys, and in which the remaining external-friction pulley contacts with an immobile internal-friction pulley. But, since the external-friction pulleys contacting the rotatable internal-friction pulleys are at one end of the shaft, and the external-friction pulley contacting the immobile internal-friction pulley is at the other end of the shaft, the friction forces exerting on both ends of the shaft are opposite. Therefore, the load which acts on the planetary bearing is great.

The object of this invention is to provide a friction transmission which can decrease the load exerting on the planet bearing.

In order to realize above object a centrifugal planetary friction transmission is proposed according to claim 1 and claim 2.

### Brief Description of the Drawings

Further advantages and features of this invention will be apparent when reference is made to the following detailed description and accompanying drawings, in which:

Fig. 1 is a schematic illustrating the principle of the centrifugal planetary friction transmission;
Fig. 2 is a schematic of basic structure of the friction transmission, said structure having a fixed speed ratio;
Fig. 3 is a left partial sectional view of Fig. 2 which shows a radially floating means;
Fig. 4 shows another example of a friction transmission, wherein diameters of external-friction pulley are larger than the radii of the internal-friction pulleys;
Fig. 5 shows an embodiment of this invention adopting an axially symmetric structure to increase driving efficiency;
Fig. 6 shows another embodiment similar to that shown in Fig. 5;
Fig. 7 illustrates a friction transmission in which a shifting transmission is used;
Fig. 8a shows a friction transmission similar to that shown in Fig. 7;
Fig. 8b shows an automatically shifting means.

### Detailed Description of the Drawings

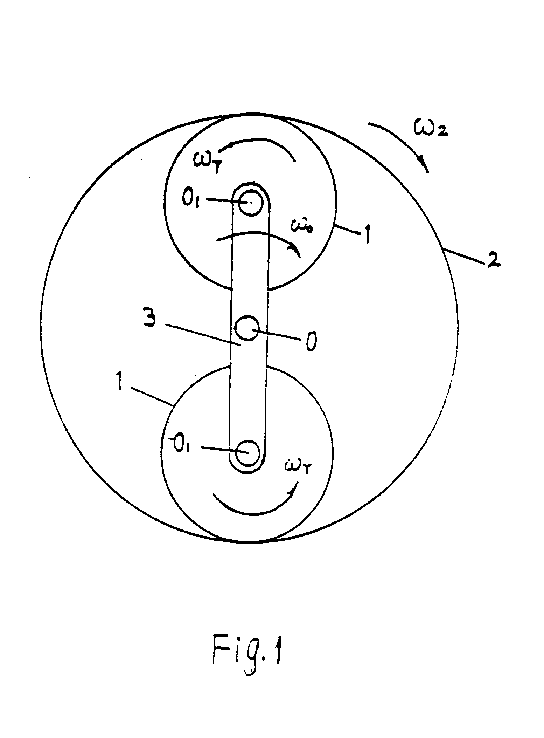

A high-speed rotating eccentric-member may cause huge centrifugal force. Fig. 1 shows the principle of the centrifugal planetary friction transmission. Planet friction pulleys 1 are provided inside an internal-friction pulley 2 and contact the internal circumference thereof so that the centrifugal force of the planet pulley 1 is transferred to a positive pressure for internal contact friction. When the crank 3 drives the pulleys 1 to revolve with it around the axle center O of the crank 3 at a high angular speed wo, the pulleys 1 rotate at an angular speed Wr around the axle centers O1 of the planet bearings, and the pulley 2 rotates at an angular speed W2 around the axle center O. The relationship of said angular speeds is as follows (in accordance with the direction of rotation shown in Fig. 1);

$$Wo \cdot r2 = W1 \cdot r1 + W2 \cdot r2$$

Where r1 and r2 are radii of the pulleys 1 and 2, respectively. In this invention, the mentioned friction pulleys are usually flat cylindrical friction pulleys. In some specific case, other kinds of friction pulleys with slight geometry sliding may be used. The flat friction pulleys used may obtain linear-contact friction without geometry sliding because of its very small resilient sliding in the internal contact. The equilibrium between the centrifugal force and the positive pressure of the planet pulleys makes the planet bearing to be free from the loading caused by centrifugal force or positive pressure. Therefore its drive efficiency is high. When the pulleys are made of metals, in particular, surface-hardened cast iron, white cast iron or quenched steel, they can bear sufficient allowable contact stress so that large output moment of force is obtained When the input angular speed Wo is higher hence obtaining huge cenfrifugal force, the volume and weight of entire transmission system may be small so that the system may have large power density. The internal-contact friction of the flat friction pulleys in which the resilient sliding is slight and the geometry sliding is absent may make the drive ratio more accurate and stable. When the number of the planet pulleys are more and they are distributed uniformly, the dynamic balance may be easily reached and the system operates evenly, moreover the bearings for input shaft and output shaft are not forced, hence further increasing the driving efficiency.

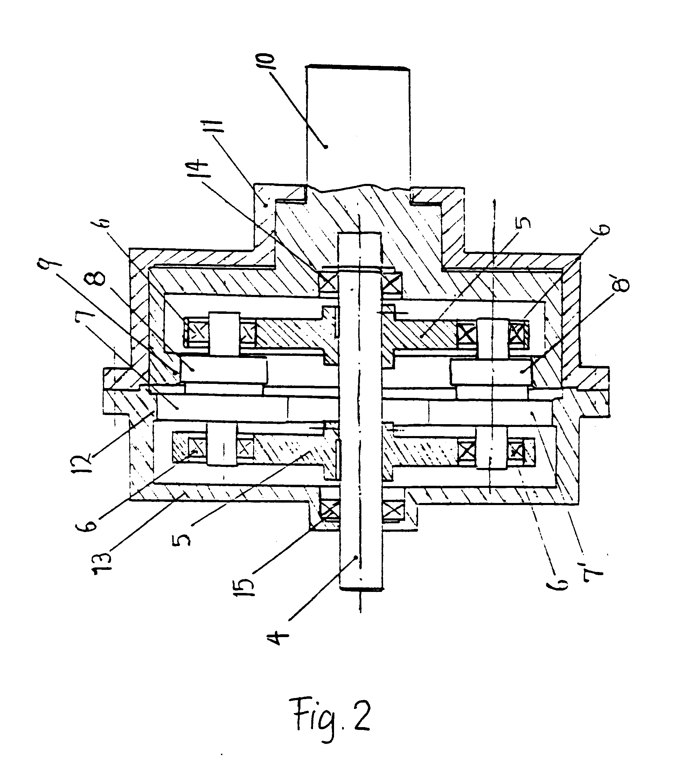

Fig. 2 shows one of the basic structures of the centrifugal planetary friction transmission, which is of double internal contact type. External-friction pulleys 7,8 and 7',8' are coaxially and fixedly connected with each other respectively to form two duplex planet friction pulley sets with same structures. They are supported by the rotating arm 5 via the shaft through the planet bearings 6. The rotating arm 5 connects fixedly with the input shaft 4 to keep the axle of each duplex planet friction pulley set parallel to the axle of input shaft and the distance between the axle of the pulley and the axle of the input shaft (eccentric distance) for both pulleys sets equal. The input shaft 4 is supported by the left housing 13 and the output shaft 10 by means of bearings 15, 14. An internal-friction pulley 12 which is integral with the leaft housing 13 contacts simultaneously with external-friction pulleys 7, 7'. An internal-friction pulley 9 which is integral with output shaft 10 contacts simultaneously with external friction pulleys 8,8'. The output shaft 10 is supported by right housing 11.

When the output shaft 4 rotates at a high speed, the rotation arm 5 drives both the duplex planet friction pulley sets to revolve. The external-friction pulleys 7, 7' rotate and are forced towards the inner circumference of the internal-friction pulley 12 under the action of centrifugal force. The coaction of revolution and rotation makes external-friction pulleys 8,8' drive the internal-friction pulley 9 to rotate at a low speed, thus the centrifugal planetary friction drive shown in Fig. 1 is established.

It is known from the mentioned formula that when outer radii of exernal-friction pulleys 7,7' and 8,8' are r1, r3 respectively, inner radii of internal-friction pulleys of 12 and 9 are r2, r4 respectively,and the angular speeds of input shaft 4 and output shalf 10 are W0,W2 respectively, then the drive ratio i may be expressed as follows:

$$i = \frac{W_0}{W_2} = 1/(1 - r2 \ r3/r1 \ r4)$$

Since the radii of friction pulleys may be arbitrary without any limitation as gear drive in which the tooth number must be integral and the modulus can not be too small, a very large drive ratio (theoretically, indefinitely large) for double internal contact type transmission may easily be reached.

A radially floating means which can make planet friction pulley move radially and freely is an important part of the centrifugal planetary friction transmission according to the present invention. Its basic structure is a radially floating slide-block shown in Fig. 3 which is a left partial sectional view of Fig. 2. In Fig. 3, the reference numbers 12 and 9 are both internal-friction pulleys, 13 is left housing, 5 is rotating arm like a disk, 4 is input shaft, 6 is planet bearing, 7 is external-friction pulley and its shaft. The outer ring of planet bearing 6 is fixedly positioned on the radially floating slide-block 16 which may only slide radially in the U-notch in the rotating arm 5. Lug 16' of slide-block 16 is engaged in the groove of the U-notch for axial location of the planet pulley system. Through the spring 17 the planet friction pulleys are still pressed against the inner wall of internal-friction pulley under static condition to prevent planet pulleys from striking against the internal-friction pulleys under effect of centrifugal force during starting. The Spring 17 may be also uned to increase the friction force. The same radially floating means is imposed on the other end of duplex planet friction pulleys sets (8,8' in Fig. 2), which make the axle stay parallel to center axle when the duplex planet friction pulley set floats radially.

There is another radially floating means in which some diameters of mounted element are intentionally larger or less than the diameter of supporting elements fitted. For example, the inner diameter of planet pulley is made slightly larger than the outer diameter of planet bearing, or the outer diameter of the shaft of planet pulley is made slightly less than the inner diameter of planet pulley, or the outer diameter of planet bearing is made slightly less than the inner diameter of the fulcrum hole of rotating arm, even the planet bearing with larger clearance is used. Therefore, the radial floating of the planet pulleys may be realized depending on the gap formed under the action of centrifugal force.

The radially floating means may be also formed through other way such as various types of mechanism for load equalization of known planet transmission, in particular, the resilience floating load-equalization attained by using non-metal materials.

One of the design principles of radially floating means is to make as much mass as possible float radially together with planet pulleys in order to reduce the weight of system and increase friction force.

The utilization of the radially floating means may reach following purposes: making the friction pulley pair have a good contact along the width of pulleys, the wear of friction pulley be compensated automatically, the load of planet pulleys in a system be equalized atomatically and uniformly, and making the drive structure be shockproof, allowing the planet bearing to be free from the action of radial contact partial force or centrifugal force and hence to bring out possibly the variable speed mode with changing central distance (the description will be given below).

High-power and high-speed drive with high power density may be easily obtained by the centrifugal planetary friction transmission according to this invention. For example, when the double internal-contact structure is used and the friction pulley is made of quenched steels and r1 = 120mm, r2 = 300mm, r3 = 114mm, r4 = 294mm, then the speed reduction ratio i = 32.7. When four pulleys of the duplex planet friction pulley sets are distributed evenly and the total width of each pulley is about 200mm, moreover, the input rotation velocity is 4500 r/m under the condition of allowable contact stress range, the output torque and transmission power may reach 7,200 kg.m and 1,100kw respectively for wet friction, and the output torque and transmission power may reach 30,000kgm and 4,000kw respectively for dry friction. When the speed reduction ratio is adjusted to be i = 8 the transmission power may be 4,500kw for wet friction and 16,000kw for dry friction. That is to say, even if in the case of wet friction, the transmission power and output torque may be over a 10-fold more than that of the gear transmission with same volume.

The centrifugal planetary friction transmission of this invention is particularly suitable to the drive with high input rotation velocity. The higher input rotation velocity is, the smaller the volume and the larger the power density is. For example, under the condition as in above example except that r1 = 40mm, r2 = 100mm, and the total width of duplex planet pulley set is 70mm, when the input rotation velocity is 1,400 r/m and the speed ratio (i) is 15, the output torque and transmission power may reach 340kgm and 320kw respectively for wet friction, and 1,400kgm and 1400kw respectively for dry friction.

In fact, the limit for centrifugal planetary friction transmission is heat-sinking capability rather than problem of strength, or problem of gear line-speed and fabrication accuracy. However, the transmission of this invention can realize very high drive efficiency hence reducing heat-generation. Moreover, the steel friction pulley can stand higher operating temperature. The housing does not need exact seal because it has no oil and other liquid therein. Therefore, it is convenient to give a blowing cooling into the housing. For example, on the input shaft in the housing a fan blower is mounted, or, at the both ends of the housing the vent may be disposed respectively for ventilation.

In order to further increase the power density, in particular, to obtain large output torque under the condition of lower input rotation velocity, following ways may be adopted in addition to known ways such as increasing friction force:

1. The steel planet pulleys are hollow and a heary metal such as lead whose specific weight is more than 7.85g/cm3 is poured into the cavities of pulleys so as to increase the centrifugal force of planet pulleys.

2. At least one friction pulley pair is replaced with a gear pair, and the center of gravity of planet pulley system is made as close to remained friction pulley pair as possible so that the centrifugal force is centralized on a few of friction pulley pairs.

3. One stage of speed increase units is added at the input end of the centrifugal planetary friction transmission.

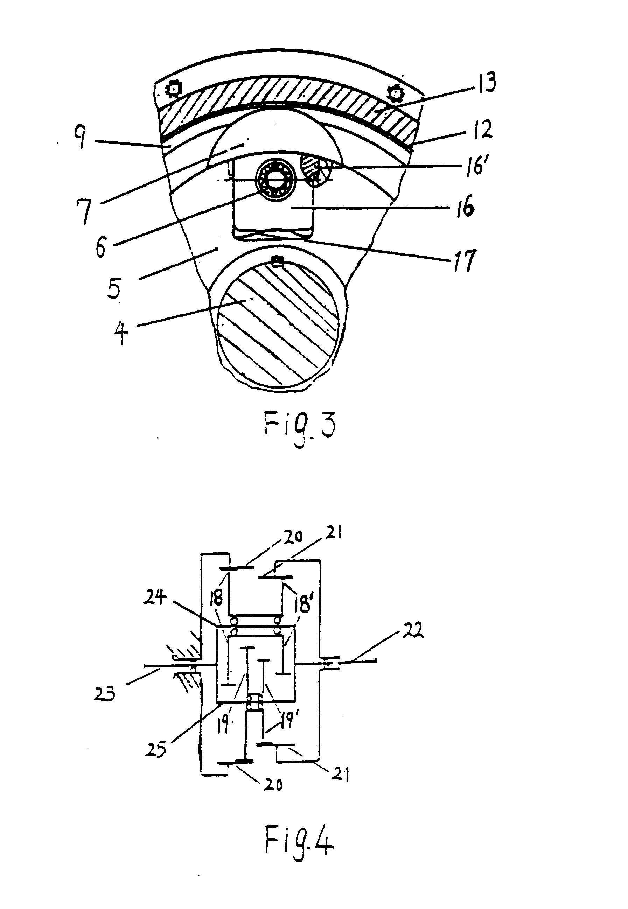

4. The curvature difference of the internal-friction pulley and the external-friction pulley is decreased so as to reduce the contact stress and to raise the upper limit of input rotation velocity. One of such basic structure is shown in Fig.4. Outer diameters of planet friction pulleys 18,19,18',19' are more than one half of inner diameters of the internal-friction pulleys 20,21 which are contacted with the plant pulleys respectively. The planet friction pulleys 18,19;18',19' interlace axially along the width and the pulleys insert into each other so as to obtain internal-friction pulley pair which possesses less curvature radius difference. Other principle is same as that shown in Fig. 2. The duplex planet friction pulley sets 18-18' and 19-19' rotate respectively on the eccentric shafts 24,25 which have a equal eccentric distance and revolve through driving of input shaft 23. Output shaft 22 is formed integrally with the internal-friction pulley 21.

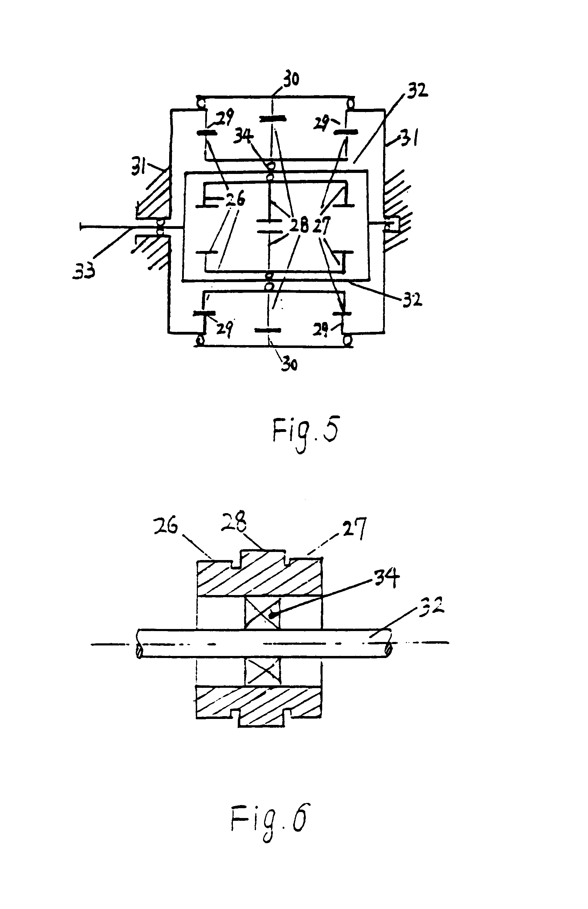

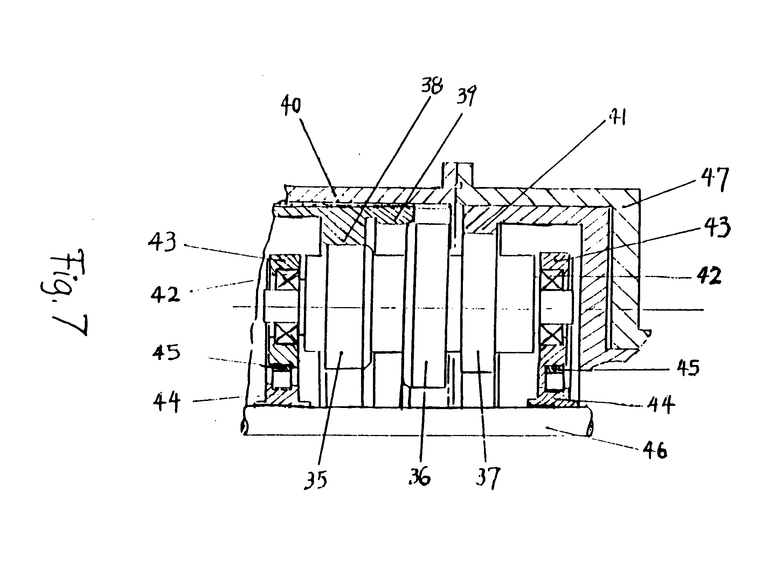

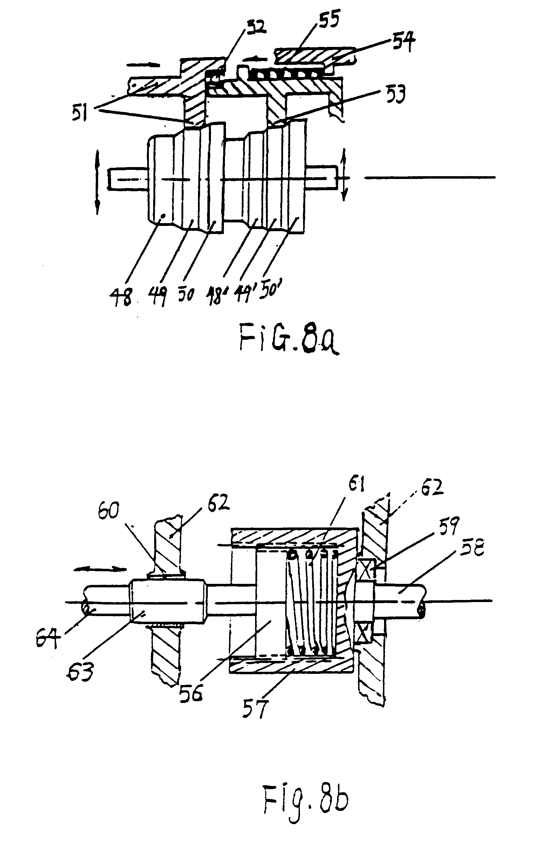

The centrifugal planetary friction transmission of this invention possesses very high driving efficiency. When the speed reduction ratio i = 50 the driving effeciency may reach 93%-95% through reasonable desing and good manufacture technique. In order to further increase driving efficiency an axial symmetrical structure is adopted according to the invention. That is, each planet pulley set consists of three coaxial external-friction pulleys connected fixedly, wherein two external-friction pulleys at both ends engage respectively with two symmetrical immobile (or rotatable) internal-friction pulleys, and the middle external-friction pulley engages with a rotatable (or immobile) internal-friction pulley. Then, the direction of friction force on planet pulley applied by internal-friction pulley at both ends is reverse to that applied by middle internal-friction pulley, most part of said friction forces cancel out by each other, only their difference between them acts on the planet pulley. Accordingly, the load on planet shaft is reduced greatly and the loss of bearing is also reduced obviously while the operating life of bearing is increased by several times to tens times. This principle is also suitable to planetary gear transmission. Fig. 5 shows a basic structure applying this principle. A triple planet friction pulley set consists of three external-friction pulleys 26, 27 and 28. The size of pulleys 26, 27 at both ends is same, they engage respectively with two symmetrical internal-friction pulleys 29, 29 having same size and linked fixedly with frame 31. The external friction pulley 28 located in the middle of triple planet friction pulley engages with rotatable internal-friction pulley 30. The triple planet friction pulley set rotates on eccentric shaft 32. Drived by input shaft 31, the eccentric shaft 32 revolves. For the triple planet friction pulley set, the friction forces from pulleys 26-27 have same direction and value, but they are reverse to the friction force from pulley 28. As a result of cancelling out by each other, only a minor difference between the friction fores acts on planet bearing 34. The device may have a plurality of triple planet friction pulleys distributed uniformly. Each triple planet friction pulley may use a center-regulating globe bearing 34 as a planet bearing. The bearing 34 is mounted on middle of inside of planet pulley set, as shown in Fig.6. This makes the internal-contact friction between pulleys 26 and 29, 27and 29 at two sides of the planet pulley set enable automatically load equalization, and error in fabricate be absorbed so as to keep excellent contact. At that time, the ends of eccentric shaft 32 are connected fixedly with axially flating sliding block. In correspondency with Fig. 5, a similar structure type in which rotatable internal-friction pulleys are provided at both ends and the immobile internal-friction pulley may be formed in middle. In this case, the rotatable internal friction pulleys at both ends are linked with a shaft which extends as a output shaft on which an input shaft like a sleeve jackets and rotates. The power is laterally transmitted to the input shaft through tapered gear, or leather belt etc. It should be noted that when the axially symmetrical structure of this invention is used in planet gear transmission, since the teeth number difference of internal gear pair will be larger, the gear design should be done according to this inventor's another method shown in Chines Patent Application No. 89104790.5 so as to reduce engagement loss.

In order to make drive ratio keep constant, after the internal-contact friction pulley pair (in particular, dry internal friction pulley pair) is weared, following relationship between the wearing value $\Delta_1$ of the planet friction pulley whose radius is r1 and the wearing value $\Delta_2$ of the internal friction pulley which engages therewith and has radius r1 should be retained:

$$\Delta_1/\Delta_2 = r1/r2$$

For this, the materials and the heat-treatment hardness of internal- and external-friction pulleys nay be changed or adjusted to make the planet friction pulley harder and internal-friction pulley softer so that the wearing value can be in accordance with above proportion. In this case, even if the diameter of the pulley is weared by micrometers the drive ratio can still keep constant. And, because of the compensation of radially floating means, the driving property keeps constant, hence, increasing greatly the operating life.

The centrifugal planetary friction transmission of this invention may be also used in speed-increasing transmission. In this case the output shaft of the above-mentioned means becomes an input shaft, while the input shaft of above means becomes an output shaft. To set up a positive pressure for friction force during starting, a strong spring is used as a pressing spring of radially floating means (say, 17 in Fig. 3), or a overrunning clutch is mounted additionally between the input shaft and the output shaft. During starting, the input shaft drives directly the output shaft through the overrunning clutch to make planet pelley set up centrifugal force and friction force. The friction force gives an acceleration for the rotating output shaft. When the rotating speed exceeds that of the input shaft the overrunning clutch is disengaged, and the transmission enters into speed-increasing operating mode.

The centrifugal planetary friction transmission may also be used for shifting transmission. For double internal-contact means (see Fig. 2), there are two kinds of shifting modes to meet the condition of equal eccentric distance. The first mode keeps the eccentric distance constant with changing simultaneously the value of r1,r2 and/or r3,r4. The second mode make eccentric distance vary companying changing the volume of r1,r3 and/or r2,r4.

The principle of the first mode is shown in Fig. 7 which is a partial sectional view and in which portions having nothing to do with the feature of the structure have been deleted. The principle and basic structure of Fig. 7 is similar to those shown in Fig. 2. The external-friction pulleys 35,36,37 are linked up coaxially to form a triple planet friction pulley set. They are supported on rotating arm 44 with the axle through planet bearing 42 and radially floating sliding block 43, and revolve by drive of input shaft 46. The function of spring 45 is the same as that of spring 17 shown in Fig. 3. External-friction pulley 37 contacts with the rotatable internal friction pulley 41 formed integrally with the input shaft. Internal-friction pulley 41 is supported by right housing 47. Internal-friction pulleys 38,39 are linked up coaxially to form a double internal-friction pulley set whose external circumference is provided slidingly inside left housing 40. The double friction pulley may slide axially with the aid of a key but it can not rotate. In the position shown in Fig. 7 the inner circumference of internal-friction pulley 38 contacts with planet friction pulley 35. When the double internal-friction pulley slides axially rightward, the inner circumference of internal-friction pulley 39 contacts with planet friction pulley 36, the external-friction pulley 36 removes rightward and separates from pulley 35. In this time the variation of r1,r2 makes the speed ratio vary though the eccentric distance has not been varied. In Fig. 7, two pairs of separable friction pulley pairs 35-38, 36-39 are formed so that there are two shifting speed ratio value. When the number of separable friction pulley pairs increases, the number of shifting ratio increases accordingly. In light of the same principle and similar structure, a plurality of separable friction pulley pairs may be disposed on the side of rotatable internal-friction pulley. When the separable friction pulley pairs are disposed on both sides and their separation movements are independentof each other, the total number of shifting speed ratio is a product of the numbers of separable friction pulley pairs on the both sides. For separable friction pulley pair, the shifting function may also be obtained through the way in which external-friction pulley may slide axially and the internal-friction pulley is immobile axially. As the eccentric distance is constant the radius difference of all internal- and external-friction pulleys should be equal. In order to make the friction pulley pairs coming easily into contact, the edge of contact sides of the friction pulleys of all separable friction pulley pairs should have larger chamfer and transits smoothly with inclined plane or curved surface (see right side of external-friction pulley 35 and internal-friction pulley 39 and left side of external-friction pulley 36 and internal-friction pulley 38, as shown in Fig. 7, also the left side of the six outer friction pulleys shown in Fig. 8a).

The principle of the second shifting mode is shown in Fig. 8a which is a partial sectional view in which the portions having nothing to do with the feature of the structure have been deleted. External-friction pulleys 48,49,50,48',49',50' are linked up coaxially to form a sextuple planet friction pulley set. Internal friction pulley 51 which can not rotate connects to rotatable internal-friction pulley 53 through bearing 52. The compression spring 55 is disposed between pulley 53 and housing 54. Friction pulleys 51,53 with the bearing 52 therebetween may slide axially as shown by the horizontal arrow, they move leftward under the action of the force of spring 55 or move rightward under the action of external thrust. As shown by the vertical arrow, the sextuple planet friction pulley set may remove radially. That is to say they move upward under the action of centrifugal force or move downward under a force caused by internal-friction pulleys when the latter are moved rightward, thus the eccentric distance is also changed. Accordingly, the radially floating means should have larger sliding path. In the position shown in Fig. 8a, pulley 51 contacts with pulley 49, pulley 53 with pulley 49', and the means has a determined speed ratio. When internal-friction pulleys 51,53 and the bearing 52 therebetween move leftward, pulley 51 contacts with pulley 48, pulley 53 with pulley 48. Under the action of centrifugal force the sextuple planet friction pulley set slides upward and contacts tightly with internal-friction pulleys so that the means obtains another speed ratio. When pulleys and bearing 51-53 move rightward, the sextuple planet friction pulley set is pushed downward, internal-friction pulley 51 contacts with pulley 50, pulley 53 with pulley 50', so that the means obtains third speed ratio. If k pairs of separable friction pulley pairs are disposed respectively on both the side of irrotational internal-friction pulley and the side of rotatable internal-friction pulley, the number of shifting speed ratio is K. For the separable friction pair, as the principle mentioned above, the shifting function may be also obtaned through other way in which the external-friction pulley may slide axially while internal-friction pulley is immobile axially. Based on the structure shown in Fig. 8a, the combination of double or multiple internal-friction pulley set (rotatable as well as irrotational) shown in Fig. 7 and multiple planet friction pulley set which may slide axially can obtain more variable speed ratios and wide shifting range.

Since the centrifugal planetary friction transmission of this invention may conveniently obtain more variable speed ratios and wide shifting range and may be speed-changed smoothly and easily during operation, it may be adopted to form a "quasi-stepless speed variator" so that it can be used more extensively, for example in the transmission system of automobile. In order to form a "quasi-stepless speed variator" used in an automobile, in addition to more variable speed ratio it is necessary that the means can shift automatically according to the load so as to obtain constant input power characteristic. For this purpose an automatically shifting means shown in Fig. 8b can be used. External-cylindrical helical gear 56 engages with internal-cylidrical helical gear (to form a gear shaft coupling when they have same number of teeth). Both gears may slide relatively to the direction of axis. The axial force resuting from engagement of said helical gears pushes gear 56 to slide rightward as shown in Fig. 8b, the compression spring 61 pushes gear 56 to slide leftward as shown by the horizontal arrow. The shaft 64 linked with gear 56 is supported on frame 62 by journal 63 through bearing bushing 60, it drives gear 56 to rotate and transfers the axial force from gear 56. Shaft 64 may be formed integrally with rotatable internal-friction pulley in above-mentioned shifting means and may directly transfer the axial force to the internal-friction pulley which may axially slide but is irrotational (as shown by 38-39 in Fig. 7 and 51 in Fig. 8b). When load increases the engaged helical gear pair 56-57 generates larger axial force propotional to load applied. Through shaft 64 the force pushes the internal-friction pulley in the shifting means to move axially so as to increase the speed ratio of shifting means and to lower output rotating speed. When load decreases, the engaging axial force of the helical gear pair weakens. Through shaft 64 the spring 61 pushes the internal-friction pulley of the shifting means to axially move along other direction so as to reduce speed ratio and to increase output rotating speed, thus, forming a quasi-stepless speed variator which possesses constant power output characteristic. Shaft 58 joins with helical gear 57 and is supported by frame 62 through bearing 59. In addition, through making outer helical gear immobile and interior helical gear sliding axially, the above purpose may also be reached. Changing the radiis of internal and external friction pulley may make the output shaft backrun so that the speed variator has reverse shift. When a freely rotatable internal (or external) friction pulley which does not connect with other elements is disposed and said pulley enters into friction-contact, the speed variator is located in free position. The locating means of each shifting grade may be determined by way of known technique. If the means shown in Fig. 8b is used in an automobile and the external gear is provided with convex addendum so that it may be used concurrently as a substitute for a universal joint.

The quasi-stepless speed variator may have concurrently both advantages of current hydraulic torque converter (shifting smoothly, having self-adaptability, absorbing shock and prolonging life of drive system) and the advantages of current gearbox (small volume, simple structure, and high driving efficiency). Moreover, it further has unique advantages such as overload protection (protecting engine from extinction), low noise, enabling engine to start under loading.

The centrifugal planetary friction transmission of this invention has further excellent starting property in addition to above-mentioned advantages. Since the friction force is set up gradually depending on arising rotating speed and increasing centrifugal force, and it further has the property of hydrodynamic clutch, the prime mover does not subject load during starting. Thus the prime mover such as electric motor has excellent starting characteristic under heavy load. To sum up, it can be expected that in high-speed power transmission field the centrifugal planetary friction transmission of this invention will be substituted for gear transmission.

## Claims

1. A centrifugal planetary friction transmission comprising an input shaft (33), an output shaft (30), at least one rotating arm (32), at least one external friction pulley set which is formed by three coaxially linked cylindrical external friction pulleys (26, 27, 28), and three internal friction pulleys (29, 29, 30) part of which being immobile and part of which being rotatable, the rotating arm (32) driving the external friction pulleys to orbit about an axis of said internal friction pulleys and to rotate about an axis of said external friction pulleys themselves, and said external friction pulleys contacting tightly with said internal friction pulleys respectively under the action of centrifugal force, characterized in that two pulleys (26, 27) of said three external friction pulleys at both ends of said external friction pulley set have the same size and contact with two immobile internal friction pulleys (29,29) which have symmetric structure and the same size, the third pulley (28) of said external friction pulley set at the middle thereof contacts with said rotatable internal friction pulley (30), the output shaft being connected with said rotatable internal friction pulley (30) to rotate therewith, so that friction forces acting on said internal friction pulleys are mostly cancelled out by each other to reduce greatly the loading of a planet bearing (34) arranged between said external friction pulley set and said rotating arm.

2. A centrifugal planetary friction transmission comprising an input shaft (33), an output shaft (30), at least one rotating arm (32), at least one external friction pulley set which is formed by three coaxially linked cylindrical external friction pulleys (26, 27, 28), and three internal friction pulleys ((29, 29, 30) one of which being immobile and one of which being rotatable, the rotating arm (32) driving the external friction pulleys to orbit about an axis of said internal friction pulleys and to rotate about an axis of said external planet friction pulleys themselves, and said external friction pulleys contacting tightly with said internal friction pulleys respectively under the action of centrifugal force, characterized in that two pulleys (26, 27) of said three external friction pulleys at both ends of said external friction pulley set have the same size and contact with two rotatable internal friction pulleys (29, 29) which have symmetric structure and the same size, the output shaft being connected with said two internal friction pulleys (29, 29) to rotate therewith, the third pulley (28) of said external friction pulley set at the middle thereof contacts with said immobile internal friction pulley (30), so that friction forces acting on said internal planet friction pulleys are mostly cancelled out by each other to reduce greatly the loading of a planet bearing (34) arranged between said external friction pulley set and said rotating arm.

3. A transmission as set forth in claim 1 or 2, wherein said planet bearing (34) is arranged in the middle of said at least one external friction pulley set and inside thereof as only one center-regulating global bearing (34).

4. A transmission as set forth in one of claims 1 to 3, wherein a radially floating means is provided by a gap disposed intentionally in the rotating arm (32).

5. A transmission as set forth in one of the preceding claims, wherein a speed increasing means being mounted additionally at the front of the transmission.

6. A transmission as set forth in one of the preceding claims wherein the external friction pulleys are hollow steel bodies filled with a heavy metal such as lead, whose specific weight is more than 7.85 g/cm$^3$.

7. A transmission as set forth in one of the preceding claims, wherein the external friction pulleys are heat treated so as to make them harder than the internal friction pulleys and to make the ratio of the wearing values of the respective contacting two pulleys substantially equal to the ratio of the radii thereof.

8. A transmission as set forth in one of the preceding claims further comprising a radially floating means (16, 17) which supports the at least one external friction pulley set so that the external friction pulleys can float radially, said floating means comprising a slide block (16), which may slide radially in a U-notch of said rotating arm (32), and a compression spring (17) disposed between said slide block and said rotating arm (32), said external friction pulley set being supported on said slide block (16) through a planet bearing (6).

9. A transmission as set forth in one of the preceding claims, further comprising at least two pairs of external friction pulleys at symmetric axial distances from the middle one, said pulleys being separable or engageable by moving axially a friction pulley thereof, thus said separation or engagement causes variation of drive speed ratio of the device, wherein the distance between the transmission axis and the axis of the external friction pulley set remains constant or is varied.

10. A transmission as set forth in claim 9, further comprising a helical gear pair (56, 57) which may generate an axial force proportional to loading, and a spring (61) which may generate an axial force whose direction is opposite to said axial force, said axial force being transferred to an axially removable friction pulley of said separable pair of friction pulleys so that the variation of the loading results in the separation or engagement of said separable pair of friction pulleys to vary the drive speed ratio automatically, the edge of the contact side of the friction pulley of the separable friction pair having a smooth transition face formed by a chamfer, an inclined plane or a curved surface.

11. A transmission as set forth in one of the claims 8-10, wherein said compression spring (17) of the radially floating means (16, 17) is a strong spring, and between said input shaft and output shaft is provided an overrunning clutch through which the input shaft drives directly the output shaft during starting to make the planet pulley set up centrifugal force for the rotating output shaft, and which overrunning clutch is disengaged when the rotating speed of the output shaft exceeds that of the input shaft and the transmission enters into speed-increasing operation mode.

12. A transmission as set forth in one of the preceding claims further comprising at least one freely-rotatable friction pulley to which other elements do not connect in order to provide an idle condition.

13. A transmission as set forth in one of `the preceding claims, further comprising at least one pair of internal and external friction pulleys, the radii of which are so determined to make the output shaft backrun so that said transmission has a reverse shift.

**Patentansprüche**

1. Planetenreibgetriebe mit Zentrifugalkraftwirkung, umfassend eine Eingangswelle (33), eine Ausgangswelle (30), wenigstens einen rotierenden Arm (32), wenigstens einen außenseitigen Reibrollensatz, der aus drei koaxial miteinander verbundenen, zylindrischen, außenseitigen Reibrollen (26, 27, 28) besteht, und drei innenseitige Reibrollen (29, 29, 30), die zum Teil unbeweglich und zum Teil drehbar sind, wobei der rotierende Arm (32) die außenseitigen Reibrollen zum Umlauf um eine Achse der innenseitigen Reibrollen und ihrerseits zur Drehung um eine Achse der außenseitigen Reibrollen selbst antreibt, und wobei sich die außenseitigen Reibrollen unter der Wirkung der Zentrifugalkraft in festem Kontakt mit den innenseitigen Reibrollen befinden, dadurch gekennzeichnet, daß zwei Rollen (26, 27) der drei außenseitigen Reibrollen an beiden Enden des außenseitigen Reibrollensatzes die gleiche Größe haben und mit zwei unbeweglichen innenseitigen Reibrollen (29, 29) symmetrischen Aufbaus und gleicher Größe in Kontakt stehen, wobei die dritte Rolle (28) des außenseitigen Reibrollensatzes in dessen Mitte mit der drehbaren innenseitigen Reibrolle (30) in Kontakt steht, und wobei die Ausgangswelle mit der drehbaren innenseitigen Reibrolle (30) zur Drehung damit in Verbindung steht, so daß sich Reibungskräfte, die auf die innenseitigen Reibrollen wirken, im wesentlichen gegenseitig aufheben, um die Belastung eines zwischen dem außenseitigen Reibrollensatzes und dem rotierenden Arm angeordneten Planetenlagers (34) weitgehend zu reduzieren.

2. Planetenreibgetriebe mit Zentrifugalkraftwirkung, umfassend eine Eingangswelle (33), eine Ausgangswelle (30), wenigstens einen rotierenden Arm (32), wenigstens einen außenseitigen Reibrollensatz, der aus drei koaxial miteinander verbundenen, zylindrischen, außenseitigen Reibrollen (26, 27, 28) besteht, und drei innenseitige Reibrollen (29, 29, 30), von denen eine unbeweglich und eine drehbar ist, wobei der rotierende Arm (32) die außenseitigen Reibrollen zum Umlauf um eine Achse der innenseitigen Reibrollen und ihrerseits zur Drehung um eine Achse der außenseitigen Planetenreibrollen antreibt, und wobei die außenseitigen Reibrollen unter der Wirkung der Zentrifugalkraft mit den innenseitigen Reibrollen in festem Kontakt stehen, dadurch gekennzeichnet, daß zwei Rollen (26, 27) der drei außenseitigen Reibrollen an beiden Enden des außenseitigen Reibrollensatzes die gleiche Größe haben und mit zwei drehbaren innenseitigen Reibrollen (29, 29) symmetrischen Aufbaus und gleicher Größe in Kontakt stehen, wobei die Ausgangswelle mit den beiden innenseitigen Reibrollen (29, 29) zur Drehung damit in Verbindung steht und die dritte Rolle (28) des außenseiten Reibrollensatzes in dessen Mitte mit der unbeweglichen innenseitigen Reibrolle (30) in Kontakt steht, so daß auf die innenseitigen Planetenreibrollen wirkende Reibungskräfte sich im wesentlichen gegenseitig aufheben, um die auf ein zwischen dem außenseitigen Reibrollensatz und dem rotierenden Arm angeordnetes Planetenlager (34) wirkende Belastung weitgehend zu reduzieren.

3. Getriebe nach Anspruch 1 oder 2, dadurch gekennzeichnet, daß das Planetenlager (34) in der Mitte und innerhalb des wenigstens einen, außenseitigen Reibrollensatzes als lediglich ein globales, den Mittelpunkt einstellendes Lager (34) angeordnet ist.

4. Getriebe nach einem der Ansprüche 1 bis 3, dadurch gekennzeichnet, daß durch einen in dem rotierenden Arm (32) angeordneten Spalt eine radial schwimmend angeordnete Einrichtung vorhanden ist.

5. Getriebe nach einem der vorangehenden Ansprüche, dadurch gekennzeichnet, daß eine die Drehzahl vergrößernde Einrichtung zusätzlich vor dem Getriebe angeordnet ist.

6. Getriebe nach einem der vorangehenden Ansprüche, dadurch gekennzeichnet, daß die außenseitigen Reibrollen hohle Stahlkörper sind, die mit einem schweren Metall wie etwa Blei gefüllt sind, dessen spezifisches Gewicht größer als 7,85 $g/cm^3$ ist.

7. Getriebe nach einem der vorangehenden Ansprüche, dadurch gekennzeichnet, daß die außenseitigen Reibrollen wärmebehandelt sind, so daß sie härter als die innenseitigen Reibrollen sind und das Verhältnis der Verschleißwerte der beiden jeweils in Kontakt stehenden Rollen im wesentlichen gleich dem Verhältnis der Radien ist.

**8.** Getriebe nach einem der vorangehenden Ansprüche, gekennzeichnet durch eine radial schwimmend angeordnete Einrichtung (16, 17), die den wenigstens einen, außenseitigen Reibrollensatz so abstützt, daß sich die außenseitigen Reibrollen radial schwimmend bewegen können, wobei die schwimmend gelagerte Einrichtung einen Schiebeblock (16) aufweist, der sich radial in einer U-förmigen Nut des rotierenden Armes (32) verschieben kann, sowie eine zwischen dem Schiebeblock und dem rotierenden Arm (32) angeordnete Druckfeder (17), wobei der außenseitige Reibrollensatz an dem Schiebeblock (16) mittels eines Planetenlagers (6) gehalten ist.

**9.** Getriebe nach einem der vorangehenden Ansprüche, gekennzeichnet durch wenigstens zwei Paare außenseitiger Reibrollen, die sich an symmetrischen axialen Abständen von der mittleren Rolle befinden, wobei die Rollen durch axiale Bewegung einer der Rollen voneinander getrennt oder in Eingriff gebracht werden können, wodurch aufgrund dieser Trennung oder des Eingriffs eine Veränderung des Antriebsdrehzahlverhältnisses der Vorrichtung erfolgt, wobei der Abstand zwischen der Getriebeachse und der Achse des außenseitigen Reibrollensatzes konstant bleibt oder verändert wird.

**10.** Getriebe nach Anspruch 9, gekennzeichnet durch eine schraubenförmige Getriebepaarung (56, 57), die in der Lage ist, eine zur Belastung proportionale Axialkraft zu erzeugen, und eine Feder (61), die eine Axialkraft erzeugt, die der genannten Axialkraft entgegengerichtet ist, wobei diese Axialkraft an eine axial verschiebliche Reibrolle des trennbaren Paars von Reibrollen übertragen werden kann, so daß die Veränderung der Belastung zu einer Trennung oder einem Eingreifen des trennbaren Paars von Reibrollen führt, um das Antriebsdrehzahlverhältnis automatisch zu verändern, wobei die kontaktseitige Kante der Reibrolle der trennbaren Reibpaarung eine weiche Übergangsfläche aufweist, die durch eine Anschrägung oder eine geneigte oder gebogene Fläche gebildet wird.

**11.** Getriebe nach einem der Ansprüche 8 bis 10, dadurch gekennzeichnet, daß die Druckfeder (17) der radial schwimmend angeordneten Einrichtung (16, 17) eine starke Feder ist, wobei zwischen der Eingangs- und Ausgangswelle eine Überholkupplung vorgesehen ist, wodurch die Eingangswelle während des Anlaufens die Ausgangswelle unmittelbar antreibt, damit der Planetenradsatz eine Zentrifugalkraft für die drehende Ausgangswelle aufbaut, wobei die Überholkupplung außer Eingriff kommt, wenn die Drehzahl der Ausgangswelle die der Eingangswelle überschreitet und das Getriebe in den drehzahlerhöhenden Arbeitsbereich gelangt.

**12.** Getriebe nach einem der vorangehenden Ansprüche, gekennzeichnet durch wenigstens eine frei drehbare Rolle, die mit keinen weiteren Elementen verbunden ist, um einen Leerlaufzustand zu schaffen.

**13.** Getriebe nach einem der vorangehenden Ansprüche, gekennzeichnet durch wenigstens ein Paar innenseitiger und außenseitiger Reibrollen, deren Radien so festgelegt sind, daß sich die Ausgangswelle rückwärts dreht, damit das Getriebe einen Rückwärtsgang hat.

**Revendications**

**1.** Transmission planétaire à friction centrifuge comprenant un arbre d'entrée (33), un arbre de sortie (30), au moins un bras tournant (32), au moins un jeu de poulies à friction externe qui est formé par trois poulies à friction externe cylindriques reliées coaxialement (26, 27, 28) et trois poulies à friction interne (29, 29, 30) dont une partie est immobile et dont une partie est montée à rotation, le bras tournant (32) entraînant les poulies à friction externe pour les mettre en orbite autour d'un axe desdites poulies à friction interne et pour les faire tourner autour d'un axe desdites poulies à friction externe elles-mêmes, et lesdites poulies à friction externe entrant en contact intime avec lesdites poulies à friction interne respectivement sous l'action de forces centrifuges, caractérisée en ce que deux poulies (26, 27) des trois poulies à friction externe situées au niveau des deux extrémités dudit jeu de poulies à friction externe présentent la même dimension et entrent en contact avec deux poulies à friction interne immobiles (29, 29) qui présentent une structure symétrique et la même dimension, la troisième poulie (28) dudit jeu de poulies à friction externe située au milieu entrant en contact avec ladite poulie à friction interne tournante (30), l'arbre de sortie étant connecté à ladite poulie à friction interne tournante (30) pour tourner avec de telle sorte que des forces de friction opérant sur lesdites poulies à friction interne s'annulent pour la plus grande part les unes les autres afin de réduire notablement la charge d'un palier planétaire (34) agencé entre ledit jeu de poulies à friction externe et ledit bras tournant.

2. Transmission planétaire à friction centrifuge comprenant un arbre d'entrée (33), un arbre de sortie (30), au moins un bras tournant (32), au moins un jeu de poulies à friction externe qui est formé par trois poulies à friction externe cylindriques reliées coaxialement (26, 27, 28) et trois poulies à friction interne (29, 29, 30) dont une est immobile et dont une peut tourner, le bras tournant (32) entraînant les poulies à friction externe pour les mettre en orbite autour d'un axe desdites poulies à friction interne et pour les faire tourner autour d'un axe desdites poulies à friction planétaire externe elles-mêmes et lesdites poulies à friction externe entrant en contact intime avec lesdites poulies à friction interne respectivement sous l'action de forces centrifuges, caractérisée en ce que deux poulies (26, 27) desdites trois poulies à friction externe situées au niveau des deux extrémités dudit jeu de poulies à friction externe présentent la même dimension et entrent en contact avec deux poulies à friction interne tournantes (29, 29) qui présentent une structure symétrique et la même dimension, l'arbre de sortie étant connecté auxdites deux poulies à friction interne (29, 29) de manière à tourner avec, la troisième poulie (28) dudit jeu de poulies à friction externe située au milieu entrant en contact avec ladite poulie à friction interne immobile (30) de telle sorte que des forces de friction opérant sur lesdites poulies à friction planétaire interne s'annulent pour la plus grande part les unes les autres afin de réduire notablement la charge d'un palier planétaire (34) agencé entre ledit jeu de poulies à friction externe et ledit bras tournant.

3. Transmission selon la revendication 1 ou 2, dans laquelle ledit palier planétaire (34) est agencé au milieu dudit au moins un jeu de poulies à friction externe et à l'intérieur de celui-ci en tant que seulement un seul palier global à effet de régulation centrale (34).

4. Transmission selon l'une quelconque des revendications 1 à 3, dans laquelle un moyen flottant radialement est constitué par un espace disposé intentionnellement dans le bras tournant (32).

5. Transmission selon l'une quelconque des revendications précédentes, dans laquelle un moyen d'augmentation de vitesse est monté en plus à l'avant de la transmission.

6. Transmission selon l'une quelconque des revendications précédentes, dans laquelle les poulies à friction externe sont des corps en acier creux remplis d'un métal lourd tel que du plomb dont le poids volumique est supérieur à 7,85 g/cm$^3$.

7. Transmission selon l'une quelconque des revendications précédentes, dans laquelle les poulies à friction externe sont traitées thermiquement de manière à les rendre plus dures que les poulies à friction interne et de manière à rendre le rapport des valeurs d'usure des deux poulies en contact respectives sensiblement égal au rapport de leurs rayons.

8. Transmission selon l'une quelconque des revendications précédentes, comprenant un moyen flottant radialement (16, 17) qui supporte l'au moins un jeu de poulies à friction externe de telle sorte que les poulies à friction externe puissent flotter radialement, ledit moyen de flottement comprenant un bloc de coulissement (16) qui peut coulisser radialement dans une encoche en U dudit bras tournant (32) et un ressort de compression (17) disposé entre ledit bloc de coulissement et ledit bras tournant (32), ledit jeu de poulies à friction externe étant supporté sur ledit bloc de coulissement (16) par l'intermédiaire d'un palier planétaire (6).

9. Transmission selon l'une quelconque des revendications précédentes, comprenant en outre au moins deux paires de poulies à friction externe à des distances axiales symétriques par rapport à celles situées en position intermédiaire, lesdites poulies pouvant être séparées ou mises en coopération en déplaçant axialement une poulie à friction prise parmi celles-ci de telle sorte que ladite séparation ou que ladite mise en coopération provoque une variation d'un rapport de vitesse d'entraînement du dispositif, la distance séparant l'axe de transmission et l'axe du jeu de poulies à friction externe restant constante ou étant amenée à varier.

10. Transmission selon la revendication 9, comprenant en outre une paire de pignons hélicoïdaux (56, 57) qui peuvent générer une force axiale proportionnelle à une charge et un ressort (61) qui peut générer une force axiale dont le sens est l'opposé de celui de ladite force axiale, ladite force axiale est transférée sur une poulie à friction mobile axialement de ladite paire séparable de poulies à friction de telle sorte que la variation de la charge conduise à la séparation ou à la mise en coopération de ladite paire séparable de poulies à friction pour faire varier le rapport de vitesse d'entraînement automatiquement, le bord du côté de contact de la poulie à friction de la paire de poulies à friction séparable présentant une face à transition douce formée par un chanfrein, un plan incliné ou une surface incurvée.

11. Transmission selon l'une quelconque des revendications 8 à 10, dans laquelle ledit ressort de compression (17) du moyen flottant radialement (16, 17) est un ressort raide et entre ledit arbre d'entrée et ledit arbre de sortie est prévu un embrayage à fonction roue libre par l'intermédiaire duquel l'arbre d'entrée entraîne directement l'arbre de sortie pendant le démarrage pour faire en sorte que la force centrifuge élaborée par la poulie planétaire fasse tourner l'arbre de sortie, lequel embrayage à fonction roue libre est débrayé lorsque la vitesse de rotation de l'arbre de sortie excède celle de l'arbre d'entrée et que la transmission entre dans un mode de fonctionnement à vitesse croissante.

12. Transmission selon l'une quelconque des revendications précédentes, comprenant en outre au moins une poulie à friction tournant librement sur laquelle d'autres éléments ne se connectent pas afin de constituer une condition de ralenti.

13. Transmission selon l'une quelconque des revendications précédentes, comprenant en outre au moins une paire de poulies à frictions interne et externe dont les rayons sont déterminés de manière à réaliser un entraînement unidirectionnel de l'arbre de sortie de telle sorte que ladite transmission réalise un passage en marche arrière.

Fig.1

Fig. 2

Fig.3

Fig.4

Fig. 5

Fig. 6

Fig. 7

FiG.8a

FIg.8b